Europäisches Patentamt

(19) European Patent Office

Office européen des brevets

(11) Numéro de publication : **0 307 264 B1**

## (12) FASCICULE DE BREVET EUROPEEN

(45) Date de publication du fascicule du brevet :
**16.10.91 Bulletin 91/42**

(51) Int. Cl.$^5$ : **F02C 7/14,** F02C 7/236,
F02C 7/22

(21) Numéro de dépôt : **88402064.5**

(22) Date de dépôt : **09.08.88**

(54) **Circuit de distribution de carburant à refroidissement accru du carburant.**

(30) Priorité : **12.08.87 FR 8711453**

(43) Date de publication de la demande :
**15.03.89 Bulletin 89/11**

(45) Mention de la délivrance du brevet :
**16.10.91 Bulletin 91/42**

(84) Etats contractants désignés :
**DE FR GB**

(56) Documents cités :
**DE-B- 1 196 016
FR-A- 1 539 323
FR-A- 2 318 314
GB-A- 912 762
US-A- 3 779 007
US-A- 4 339 917
US-A- 4 354 345**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Dehan, Gérard Charles Henri
26, rue Rosalie
F-91230 Montgeron (FR)**
Inventeur : **Doublier, Michel Gaston Alexandre
41, Allée de Champagne
F-77350 Le Mée sur Seine (FR)**
Inventeur : **Greiner, Gérard
6, rue de la Coeuillette
F-94500 Champigny (FR)**

(74) Mandataire : **Moinat, François et al
S.N.E.C.M.A. Service des Brevets Boîte
Postale 81
F-91003 Evry Cédex (FR)**

EP 0 307 264 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un circuit de distribution de carburant notamment pour un turboréacteur aéronautique et plus particulièrement les moyens de refroidissement du carburant dans un tel circuit.

Les circuits de distribution de carburant des turbomachines d'aviation comprennent de façon connue une pompe basse pression, généralement du type centrifuge, qui reçoit du carburant d'une pompe de gavage disposée dans le réservoir de l'avion, pour le délivrer à une pompe volumétrique haute pression. En sortie de cette dernière, le carburant est envoyé à travers un doseur de débit vers le circuit d'injection. Une soupape régulatrice placée en dérivation à la sortie de la pompe haute pression permet de dériver une partie du carburant et de le recycler en amont de la pompe haute pression sous l'action d'une pression de commande de telle sorte que la perte de charge aux bornes du doseur de débit soit constante.

Le carburant qui circule dans ce genre de circuits de distribution peut être soumis à des variations importantes de température. Ainsi en sortie de la pompe basse pression, le carburant est à une température T1 d'une vingtaine de degrés Celsius tandis qu'après son passage dans la pompe volumétrique haute pression, et donc dans le circuit dérivé de la soupape régulatrice, le même carburant peut avoir subi un échauffement qui l'amène à une température T2 proche de 100°C, voire même supérieure.

En effet, dans certaines conditions de vol, à haute altitude et faible vitesse par exemple, le débit injecté dans la chambre de combustion du moteur par le circuit d'injection est faible alors que, la pompe haute pression tournant à vitesse élevée, donc à débit élevé, la portion du débit dérivée par la soupape régulatrice est importante. Le carburant dérivé, à température T2, est réintroduit dans le circuit en amont de la pompe haute pression et donc le carburant qui entre dans la pompe haute pression est un mélange du carburant "froid" issu de la pompe basse pression en faible proportion et du carburant "chaud" recyclé issu de la soupape régulatrice en forte proportion et sa température T est proche de T2: Du fait de cette température T élevée à l'entrée de la pompe haute pression, celle-ci s'échauffe encore et entraine un nouvel accroissement de la température T2. Une telle surchauffe du carburant peut entrainer la décomposition de celui-ci (si la température T2 dépasse 150°C) et des phénomènes de cavitation dans la pompe haute pression.

D'autre part, si le carburant du circuit de distribution est utilisé comme élément réfrigérant d'un échangeur de chaleur afin, par exemple, de refroidir des circuits d'huile associés au moteur, un échauffement excessif du carburant fait perdre à celui-ci ses capacités de réfrigération. En effet, un tel échangeur de chaleur est généralement disposé dans le circuit de recyclage du carburant, en aval de la soupape régulatrice ou en amont de la pompe haute pression, où les conditions sont les plus favorables à son fonctionnement, bien que le carburant y soit plus chaud qu'à la sortie de la pompe BP, car le débit y est beaucoup plus important dans les conditions les plus critiques, en particulier en vol à haute altitude et faible vitesse. Mais pour cela, dans certains cas critiques, il faut donc pouvoir réduire une température T2 trop élevée pour que l'échangeur joue convenablement son rôle.

Pour résoudre ce problème, on pourrait penser à installer un échangeur de chaleur air-carburant spécifique pour refroidir le carburant dans les phases particulières de vol précédemment évoquées.

L'encombrement et le poids d'un tel échangeur, utile seulement dans ces phases de vol, pénaliseraient les performances du moteur et de l'avion dans tout le reste du domaine de vol.

Selon l'invention, on évite le recours à un tel échangeur de chaleur spécifique au carburant en prélevant, en aval des sources d'échauffement, un débit qc de carburant chaud et en faisant retouner ce débit qc directement au réservoir de l'avion.

Si la température du carburant chaud est trop élevée pour son retour direct au réservoir avion, en raison de la relativement faible tenue en température des structures de l'avion et du réservoir, on prélève aussi un débit qf de carburant froid entre la pompe basse pression et la source d'échauffement la plus en amont et on mélange ce débit qf au débit qc de carburant chaud prélevé pour refroidir ce denier avant de le faire retourner au réservoir de l'avion.

Selon l'état de la technique représenté par FR-A-2318314 le circuit de distribution de carburant peut comporter un moyen de dérivation supplémentaire d'un débit qc de carburant chaud prélevé en un point P2 situé entre la soupape régulatrice et le point P1 de recyclage du carburant dérivé par la soupape régulatrice, ledit débit qc étant lui-même retourné au réservoir avion pour diminuer la température du carburant entrant dans la pompe haute pression du fait que le débit qc de carburant chaud prélevé y est remplacé automatiquement par un débit égal de carburant froid.

Néanmoins cette solution est imparfaite car le carburant chaud retournant au réservoir avion peut endommager la structure dudit réservoir.

Selon l'invention, pour permettre le refroidissement du carburant avant son retour au réservoir avion, le moyen de dérivation supplémentaire comporte un dispositif de mélange du débit qc de carburant chaud prélevé en P2 avec un débit qf de carburant froid prélevé en un point Po du circuit principal situé entre la pompe basse pression et le point P1 de recyclage du carburant chaud dérivé, pour former un débit qr de carburant tiède retourné au réservoir avion.

Le dispositif de mélange peut comporter un moyen de dosage des débits qc de carburant chaud et qf de carburant froid prélevés permettant de maintenir à peu près constants ces débits, ainsi qu'un moyen de variation de ce dosage permettant de modifier ces débits proportionnellement.

Si le circuit de carburant selon l'invention, comporte un échangeur de chaleur dont le carburant constitue l'élément réfrigérant, l'échangeur peut être disposé préférentiellement entre la soupape régulatrice et le point de prélèvement P2 du débit qc de carburant chaud, ou encore entre le point P1 de recyclage du carburant chaud et l'entrée de la pompe haute pression.

D'autres caractéristiques de l'invention seront détaillées en regard de la planche annexée qui montre un mode de réalisation de l'invention.

Si l'on se reporte à cette planche, un circuit de distribution de carburant vers les injecteurs 1 de la chambre de combustion d'une turbomachine comporte un circuit principal dans lequel une pompe basse pression 2 reçoit du carburant d'une pompe de gavage située dans le réservoir 3 de l'avion. Ce carburant est envoyé à une pompe haute pression 4 au travers d'un filtre principal 5 puis, par l'intermédiaire d'un doseur de débit 6 (éventuellement précédé d'un filtre d'asservissement 7), au circuit d'injection 1 au travers d'un clapet d'arrêt 8 commandé par un électro-robinet 9 alimenté en carburant depuis le filtre d'asservissement 7.

Une soupape régulatrice 10, disposée en dérivation entre la pompe haute pression 4 et ici le filtre d'asservissement 7 permet de dériver une partie q1 du débit de carburant en aval de la pompe 4 pour le recycler vers l'amont de la pompe, sous l'action d'une pression de commande, de telle sorte que la perte de charge aux bornes du doseur 6, c'est à dire la différence des pressions Pam en amont et Pav en aval du doseur, soit constante. Les moyens de mesure de la perte de charge et d'obtention de la pression de commande de la soupape régulatrice 10 ne sont pas représentés ici.

La soupape régulatrice 10 dérive le débit q1 de carburant qui est recyclé en un point P1 du circuit principal, situé entre la pompe basse pression 2 et la pompe haute pression 4, ici en amont du filtre principal 5.

Le clapet d'arrêt 8 interdit le passage du carburant vers les injecteurs 1 quand l'électro-robinet 9 est ouvert. Quand l'électro-robinet 9 est refermé, l'excédent de carburant compris entre le clapet d'arrêt 8 et l'électro-robinet 9 retourne au point P1 au travers d'un petit étranglement X.

Le carburant qui circule dans ce circuit de distribution peut être utilisé comme élément réfrigérant d'un échangeur de chaleur destiné à refroidir des circuits annexes, par exemple des circuits d'huile de lubrification de paliers ou de roulements du moteur. De tels échangeurs de chaleur peuvent être insérés en n'importe quel point du circuit de carburant, par exemple entre la pompe basse pression 2 et le point P1 de recyclage du circuit dérivé par la soupape régulatrice 10, tel que représenté en pointillé sous le repère 11. A cet endroit du circuit, le carburant n'est pas encore échauffé et sa température T1 est faible, par exemple de 20°, cette valeur n'étant qu'indicative.

Cependant, on peut préférer disposer un tel échangeur de chaleur dans la boucle de retour de la soupape régulatrice 10, entre celle-ci et le point P1, tel que représenté sous le repère 11', bien que cette configuration soit moins favorable que la précédente puisque la température T2 du carburant à la sortie de la soupape régulatrice 10 est plus élevée (environ 100° à titre indicatif), cet échauffement étant dû notamment au passage du carburant dans la pompe haute pression volumétrique 4. En effet, le débit de carburant dans cette boucle est beaucoup plus régulier que dans la position ci-dessus. En particulier, il est beaucoup plus important dans les conditions critiques de vol à haute altitude et faible vitesse, ce qui lui permet d'évacuer davantage de calories dans ces conditions malgré sa température plus élevée, pourvu que celle-ci ne soit pas excessive. Mieux encore, on préférera disposer un tel échangeur de chaleur entre le point P1 et l'entrée de la pompe haute pression 4, dans une position voisine du filtre principal 5, mais non représentée, où la température T est inférieure à la température T2 comme on l'a vu ci-dessus et où le débit est en permanence celui de la pompe haute pression 4, donc le plus élevé.

Le carburant chaud, à température T2 dérivé par la soupape régulatrice 10 ou à température plus élevée s'il a reçu des calories de l'échangeur de chaleur 11', est mélangé en P1 au carburant froid à température T1 provenant de la pompe basse pression 2. Pour éviter un échauffement excessif du carburant, on prélève en un point P2 situé en aval de la soupape régulatrice 10 dans le circuit dérivé (et en aval de l'échangeur 11' s'il existe) un débit qc du carburant chaud dérivé.

Si les structures de l'avion et du réservoir supportent une telle température, ce débit qc peut être directement refoulé vers le réservoir avion 3. Si tel n'est pas le cas, on prélève en amont de toute source d'échauffement du carburant, c'est à dire en un point Po situé entre la pompe basse pression 2 et le point P1, (et en amont de l'échangeur 11 s'il existe), un débit qf de carburant froid que l'on vient mélanger au débit qc de carburant chaud prélevé en P2 au moyen d'un dispositif de mélange généralement référencé 12, afin de former un débit qr de carburant tiède qui sera retourné au réservoir avion 3.

Le dispositif de mélange est constitué d'une vanne mélangeuse 13 comportant un tiroir 14 composé de deux épaulements 15a, 15b séparés par un chambrage central 16 de diamètre réduit et délimitant avec la douille 17 qui le contient, deux chambres d'extrémité 18, 19 et une chambre centrale 20, les trois dites chambres étant reliées par un alésage axial 21 et un alésage radial 21', ladite chambre centrale 20 recevant le débit qf de carburant froid par un conduit 22 et comportant un chambrage 23 relié à la tubulure 24 de sortie du débit qr de carburant tiède, tandis que la première 18 des chambres d'extrémité reçoit le débit qc de carburant chaud par un conduit 25 et que la deuxième 19 des chambres d'extrémité contient un ressort y en appui sur le fond de la chambre 19 et sur l'épaulement 15b du tiroir 14.

Le moyen de dosage des débits qf de carburant froid et qc de carburant chaud prélevés est constitué par la combinaison d'un premier étranglement de section S1 fixe disposé dans le conduit 22 reliant le point Po et la chambre centrale 20 de la vanne mélangeuse 13, d'un second étranglement de section S2 fixe réalisé dans l'alésage axial 21 reliant la première chambre d'extrémité 18 et ladite chambre centrale 20 et d'un étranglement de section Sx variable réalisé entre le chambrage 23 de la chambre centrale 20 et l'épaulement 15a du tiroir 14.

Le fonctionnement de la vanne mélangeuse 13 est le suivant :

— la section de l'étranglement Sx dépend de la position du tiroir 14 qui, elle-même, dépend de la différence entre les pressions agissant sur les faces externes des épaulements 15a et 15b contre le ressort y. Ce ressort étant de faible raideur, on peut considérer que cet étranglement maintient quasi constante la différence entre les pressions des deux chambres d'extrémité 18 et 19, donc aussi dans ce cas entre les pressions des deux chambres 18 et 20, c'est-à-dire entre les pressions amont et aval des deux étranglements S1 et S2 ;

— les étranglements S1 et S2 ayant des sections fixes et étant alimentés en carburant à la pression à peu près constante du refoulement de la pompe basse pression 2, les débits qf et qc qui les traversent sont eux aussi constants et proportionnels à ces sections.

Pour augmenter le débit qc de carburant chaud dérivé par ce dispositif sans réchauffer le débit qr de carburant tiède retourné au réservoir avion, ce dispositif comprend un moyen de variation du dosage des débits qc et qf prélevés, constitué par un circuit 26 reliant le conduit 25 de prélèvement du débit qc de carburant chaud prélevé et la seconde chambre d'extrémité 19 de la vanne mélangeuse 13 et comportant en série une électrovanne 27 et un troisième étranglement de section fixe S3 et par un quatrième étranglement de section fixe S4 disposé dans l'alésage axial 21 reliant la seconde chambre d'extrémité 19 et la chambre centrale 20 de la vanne mélangeuse.

Dans ce cas, quand l'électrovanne 27 est ouverte, le fonctionnement de la vanne mélangeuse 13 est le suivant :

— l'électrovanne 27 laisse passer un débit faible de carburant chaud en supplément à travers les deux étranglements en série S3 et S4 dont les sections sont petites. La pression qui règne dans la deuxième chambre d'extrémité 19 devient alors intermédiaire entre la pression en amont des étranglements S1, S2, S3 et celle de la chambre 20.

— Pour retrouver un équilibre, le tiroir 14 se déplace alors vers la droite et donne une section Sx plus grande et une pression dans la chambre 20 plus faible.

— En conséquence, les débits qf et qc qui traversent les étranglements S1 et S2 augmentent en proportion.

Le moyen de dérivation de carburant chaud tel que décrit ci-dessus peut comporter également un clapet de retour 28 interposé dans le conduit 24 et dont l'ouverture/fermeture est obtenue par l'ouverture/fermeture d'un électro-robinet 29 alimenté en carburant de commande depuis le filtre d'asservissement 7 et agissant contre un ressort Z adjoint au clapet 28. Les deux chambres de commande du clapet 28 sont reliées l'une à l'autre par un perçage 4 de faible section et la deuxième chambre de commande du clapet 28 est reliée à la sortie de l'électro-robinet 9 de commande du clapet d'arrêt 8.

Grâce à cela, quand l'électro-robinet 29 se ferme, le carburant en excès dans la première chambre s'échappe vers la deuxième et permet au clapet 28 de se fermer sous l'action du ressort Z. Quand l'électro-robinet 29 s'ouvre, le carburant en excès dans la deuxième chambre s'échappe par l'étranglement X et permet au clapet de s'ouvrir. De plus, quand l'électro-robinet 9 s'ouvre pour fermer le passage du carburant vers les injecteurs, il ferme aussi le clapet 28 et le passage de retour du carburant vers le réservoir avion 3.

La description précédente a été effectuée avec une section S3 fixe et une électrovanne 27 à commande d'ouverture tout ou rien. De ce fait, le débit qc de carburant chaud prélevé passe d'une première valeur à une seconde valeur discrète supérieure lors de l'ouverture de la vanne 27.

Si maintenant le diaphragme S3 est à section variable, alors on peut réaliser une variation progressive des débits qc de carburant chaud et qf de carburant froid prélevés.

Un avantage intéressant de l'invention provient de ce que le débit de carburant à travers l'échangeur de chaleur n'est pas modifié par le dispositif de l'invention, quelle que soit la place occupée par l'échangeur dans le circuit de distribution.

Un autre avantage est que la température du carburant retournant au réservoir peut être, grâce au dispositif de l'invention, très différente de la température du carburant sortant de l'échangeur. Elle est dans les domaines de vol visés, un des paramètres importants du pilotage, ce qui confirme l'intérêt du dispositif selon l'invention.

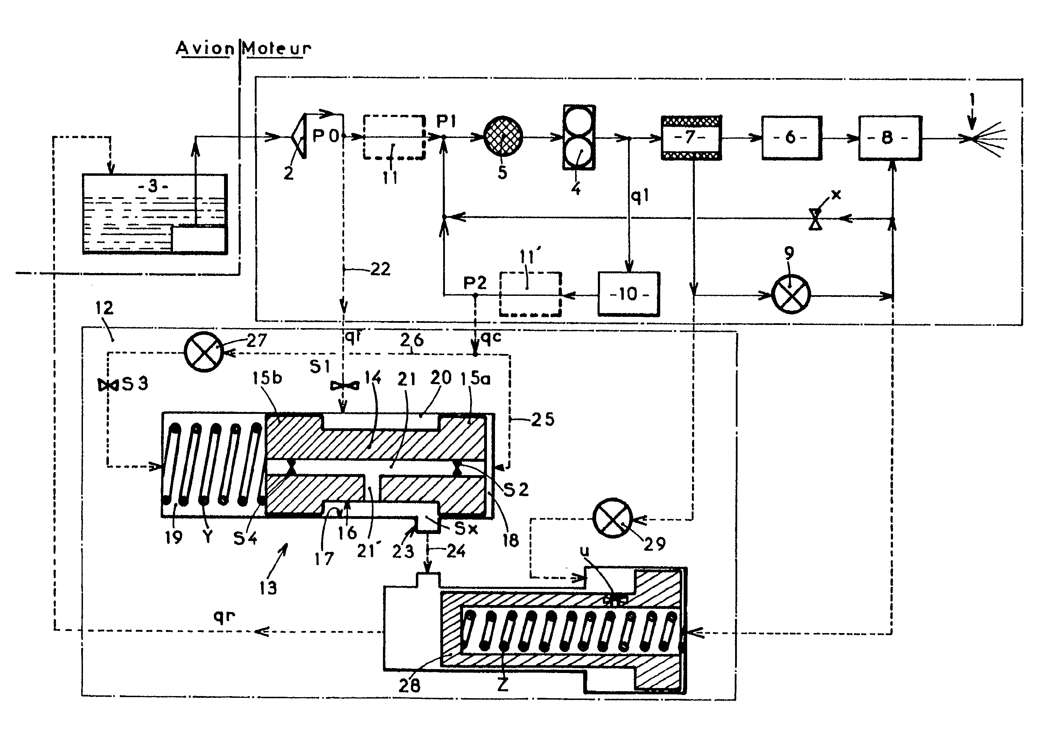

## Revendications

1. Circuit de distribution de carburant d'un turboréacteur aéronautique, comportant de façon connue une pompe basse pression centrifuge (2) recevant par l'intermédiaire d'une pompe de gavage du carburant d'un réservoir avion (3) pour le délivrer à une pompe haute pression volumétrique (4) en sortie de laquelle le carburant est envoyé à travers un doseur (6), à un circuit d'injection (1), tandis qu'une soupape régulatrice (10) disposée en dérivation permet de dériver, entre la pompe haute pression et le doseur, un débit q1 de carburant, pour maintenir constante la différence des pressions Pam et Pav en amont et en aval du doseur, le débit q1 étant recyclé en un point P1 du circuit de carburant situé entre les pompes basse et haute pression, circuit de distribution comportant un moyen de dérivation supplémentaire (12) d'un débit qc de carburant chaud prélevé en un point P2 situé entre la soupape régulatrice (10) et le point P1, ledit débit qc étant retourné au réservoir avion (3) pour diminuer la température du carburant entrant dans la pompe haute pression par remplacement permanent d'un débit qc de carburant chaud prélevé par un débit égal de carburant froid, caractérisé en ce que le moyen de dérivation supplémentaire comporte un dispositif de mélange (13) du débit qc de carburant chaud prélevé avec un débit qf de carburant froid prélevé en un point Po du circuit principal situé entre la pompe basse pression (2) et le point P1 de recyclage du carburant chaud dérivé, pour former un débit qr de carburant tiède retourné au réservoir-avion (3).

2. Circuit de distribution de carburant selon la revendication 1 caractérisé en ce que le dispositif de mélange comporte un moyen de dosage des débits qc de carburant chaud et qf de carburant froid prélevés permettant de maintenir à peu près constants ces débits.

3. Circuit de distribution de carburant selon la revendication 1 caractérisé en ce qu'il comporte un moyen de variation du dosage des débits qc et qf permettant de modifier ces débits proportionnellement.

4. Circuit de distribution de carburant selon l'une quelconque des revendications 1 à 3, caractérisé en ce que le dispositif de mélange est constitué d'une vanne mélangeuse (13) comportant un tiroir (14) composé de deux épaulements (15a, 15b) séparés par un chambrage central (16) de diamètre réduit et délimitant avec la douille (17) qui le contient deux chambres d'extrémité (18, 19) et une chambre centrale (20), les trois dites chambres étant reliées par un alésage axial (21) et un alésage radial (21'), ladite chambre centrale (20) recevant le débit qf de carburant froid par un conduit (22) et comportant un chambrage (23) relié au conduit (24) de sortie du débit qr de carburant tiède, tandis qu'une première (18) des chambres d'extrémité reçoit le débit qc de carburant chaud par un conduit (25) et que la deuxième (19) des chambres d'extrémité contient un ressort (y) en appui sur le fond de la chambre (19) et sur l'épaulement (15b) du tiroir (14).

5. Circuit de distribution de carburant selon la revendication 4 caractérisé en ce que le moyen de dosage des débits qf de carburant froid et qc de carburant chaud prélevés, est constitué par la combinaison d'un premier étranglement de section S1 fixe disposé dans le conduit (22) reliant le point Po et la chambre centrale (20) de la vanne mélangeuse et d'un second étranglement de section S2 fixe réalisé dans l'alésage axial (21) reliant la première chambre d'extrémité (18) et ladite chambre centrale (20) et d'un étranglement de section Sx variable réalisé entre le chambrage (23) de la chambre centrale (20) et l'épaulement (15a) du tiroir (14).

6. Circuit de distribution de carburant selon l'une des revendications 4 ou 5, caractérisé en ce que le moyen de variation du dosage des débits qc et qf prélevés est constitué par un circuit (26) reliant le conduit (25) de prélèvement du débit qc et la seconde chambre d'extrémité (19) de la vanne mélangeuse et comportant en série une électrovanne (27) et un troisième étranglement S3 et par un quatrième étranglement de section fixe S4 disposé dans l'alésage axial (21) reliant la seconde chambre d'extrémité (19) et la chambre centrale (20) de la vanne mélangeuse.

7. Circuit de distribution de carburant selon l'une quelconque des revendications 1 à 6, caractérisé en ce qu'il comporte un clapet de retour (28) disposé entre la sortie du dispositif de mélange et le réservoir avion.

## Patentansprüche

1. Kraftstoffverteilungssystem für ein Luftfahrzeug-Strahltriebwerk, das in bekannter Weise eine Niederzentrifugaldruckpumpe (2) aufweist, die über eine Aufladungspumpe Kraftstoff aus einem Flugzeugtank (3) aufnimmt, um ihn an eine volumetrische Hochdruckpumpe (4) weiterzuleiten, von deren Ausgang der Kraftstoff über einen Dosierer (6) einem Einspritzkreis (1) zugeführt wird, während ein in einem Abzweigkreis angeordnetes Reglerventil (10) das Abzweigen einer Kraftstoffmenge q1 zwischen der Hochdruckpumpe und dem Dosierer ermöglicht, um die Differenz der Drücke Pam und Pav an der stromaufwärtigen bzw. der stromabwärtigen Seite des Dosierers konstant zu halten, wobei die Kraftstoffmenge q1 zu einem zwischen der Niederdruckpumpe und der Hochdruckpumpe liegenden Punkt P1 des Kraftstoffkreises zurückgeführt wird, und wobei das Kraftstoffverteilungssystem ein zusätzliches Abzweigmittel (12) zur Abzweigung einer Menge qc heißen Kraftstoffs aufweist, die in einem zwischen dem Reglerventil (10) und dem Punkt P1 liegenden Punkt P2 entnommen und in den Flugzeugtank (3) zurückgeführt wird, um die Temperatur des in die Hochdruckpumpe eintretenden Kraftstoffs durch ständiges Ersetzen einer entnommenen Menge qc an heißem Kraftstoff durch ein gleich große Menge an kaltem Kraftstoff herabzusetzen, dadurch gekennzeichnet, daß das zusätzliche Abzweigmittel eine Mischvorrichtung (13) enthält zum Mischen der entnommenen Menge qc heißen Kraftstoffs mit einer Menge qf kalten Kraftstoffs, der in einem Punkt Po des Hauptkreises entnommen wird, der zwischen der Niederdruckpumpe (2) und dem Punkt P1 liegt, zu dem der entnommene heiße Kraftstoff rückgeführt wird, um eine Menge qr an lauwarmem Kraftstoff zu gewinnen, die in den Flugzeugtank (3) zurückgeführt wird.

2. Kraftstoffverteilungssystem nach Anspruch 1, dadurch gekennzeichnet, daß die Mischvorrichtung ein Mittel zum Dosieren der entnommenen Mengeen qc und qf heißen bzw. kalten Kraftstoffs aufweist, das es ermöglicht, diese Mengen annährend konstant zu halten.

3. Kraftstoffverteilungssystem nach Anspruch 1, dadurch gekennzeichnet, daß ein Mittel zum Ändern der Dosierung der Kraftstoffmengen qc und qf vorgesehen ist, das eine proportionale Änderung dieser Kraftstoffmengen ermöglicht.

4. Kraftstoffverteilungssystem nach einem der Ansprüche 1 bis 3, dadurch gekennzeichnet, daß die Mischvorrichtung von einem Mischventil (13) gebildet ist mit einem Schieber (14), der zwei durch eine zentrale Einsenkung (16) mit reduziertem Durchmesser getrennte Schultern (15a, 15b) aufweist und mit der Buchse (17), in der er (14) aufgenommen ist, zwei endseitige Kammern (18, 19) und eine zentrale Kammer (20) begrenzt, welche drei Kammern (18, 19, 20) durch eine axiale Bohrung (21) und eine radiale Bohrung (21') miteinander verbunden sind, wobei die zentrale Kammer (20), die über eine Leitung (22) die Menge qf kalten Kraftstoffs aufnimmt, eine Einsenkung (23) besitzt, die mit der Ausgangsleitung (24) für Abgabe der Menge qr lauwarmen Kraftstoffs verbunden ist, während eine erste (18) der beiden endseitigen Kammern über eine Leitung (25) die Menge qc heißen Kraftstoffs aufnimmt und die zweite (19) der endseitigen Kammern eine Feder (y) enthält, die sich am Boden der Kammer (19) und an der Schulter (15b) des Schiebers (14) abstützt.

5. Kraftstoffverteilungssystem nach Anspruch 4, dadurch gekennzeichnet, daß das Mittel zum Dosieren der entnommenen Mengen qf und qc heißen bzw. kalten Kraftstoffs besteht aus der Kombination einer in der den Punkt Po und der zentralen Kammer (20) des Mischventils verbindenden Leitung (22) angeordneten ersten Drossel mit festem Querschnitt S1, einer in der die erste endseitige Kammer (18) und die zentrale Kammer (20) verbindenden axialen Bohrung (21) angeordneten zweiten Drossel mit festem Querschnitt S2 und einer zwischen der Einsenkung (23) der zentralen Kammer (20) und der Schulter (15a) des Schiebers (14) angeordneten Drossel mit variablem Querschnitt Sx.

6. Kraftstoffverteilungssystem nach einem der Ansprüche 4 oder 5, dadurch gekennzeichnet, daß das Mittel zum Ändern der Dosierung der entnommenen Kraftstoffmengen qc und qf aus einem Kreis (26), der die Leitung (25) zur Entnahme der Kraftstoffmenge qc und die zweite endseitige Kammer (19) des Mischventils miteinander verbindet und in Reihe ein Elektroventil (27) und eine dritte Drossel S1 enthält, und einer vierten Drossel mit festem Querschnitt S4 besteht, die in der axialen Bohrung (21) angeordnet ist, die die zweite endseitige Kammer (19) und die zentrale Kammer (20) des Mischventils miteinander verbindet.

7. Kraftstoffverteilungssystem nach einem der Ansprüche 1 bis 6, dadurch gekennzeichnet, daß zwischen dem Ausgang der Mischvorrichtung und dem Flugzeugtank ein Rücklaufventil (28) angeordnet ist.

## Claims

1. Fuel distribution circuit for an aircraft turbojet engine, comprising in known fashion a centrifugal low pressure pump (2) receiving fuel from the aircraft's tank (3) through the intermediary of a booster pump and delivering this to a high pressure positive displacement pump (4) at the outlet of which the fuel is passed through a flowmeter (6) to an injector circuit (1), whilst a regulating valve (10) placed in a bypass enables a flow q1 of fuel to be diverted between the high pressure pump and the flowmeter so as to maintain constant the difference in pressure between the pressures Pam and Pav upstream and downstream of the flowmeter, the flow q1 being recycled at a point P1 in the fuel circuit and situated between the low and high pressure pumps, the distribution circuit comprising a supplementary means of diverting (12) a flow qc of hot fuel drawn off at a point P2 situated between the regulating valve (10) and the point P1, the said flow qc being returned to the aircraft's tank (3) to reduce the temperature of the fuel entering the high pressure pump by the permanent replacement of a drawn-off flow qc of hot fuel by an equal flow of cold fuel, characterised in that the supplementary means of bypassing comprises a device for mixing (13) the flow qc of hot fuel drawn off with a flow qf of cold fuel drawn off at a point Po in the main circuit and situated between the low pressure pump (2) and the point P1 for the recycling of the hot fuel drawn off, to form a flow qr of tepid fuel to be returned to the aircraft's tank (3).

2. Fuel distribution circuit in accordance with Claim 1, characterised in that the mixing device comprises a means of metering the flows qc of hot fuel and qf of cold fuel drawn off, thus allowing these flows to be maintained more or less constant.

3. Fuel distribution circuit in accordance with Claim 1, characterised in that it comprises a means of varying the rate of the flows qc and qf, allowing these flows to be altered proportionally.

4. Fuel distribution circuit in accordance with any one of Claims 1 to 3, characterised in that the mixing device is constituted by a mixer valve (13) comprising a plunger (14) comprising two shoulders (15a, 15b) separated by a central recess (16) of reduced diameter and delimiting with the sleeve (17) in which it is contained two end chambers (18, 19) and a central chamber (20), the said three chambers being connected by an axial bore (21) and a radial bore (21'), the said central chamber (20) receiving the flow qf of cold fuel through a pipe (22) and comprising a recess (23) connected to the outlet pipe (24) of the flow qr of tepid fuel, whilst a first (18) of the end chambers receives the flow qc of hot fuel through a pipe (25) and in that the second (19) of the end chambers contains a spring (y) bearing against the end of the chamber (19) and against the shoulder (15b) of the plunger (14).

5. Fuel distribution circuit in accordance with Claim 4, characterised in that the means of metering the flows qf of cold fuel and qc of hot fuel drawn off is constituted by the combination of a first choke of fixed cross section S1 placed in the pipe (22) connecting the point Po and the central chamber (20) of the mixer valve and a second choke of fixed cross section S2 formed in the axial bore (21) connecting the first end chamber (18) and the said central chamber (20) and a choke of variable cross section Sx placed between the recess (23) of the central chamber (20) and the shoulder (15a) of the plunger (14).

6. Fuel distribution circuit in accordance with either of Claims 4 or 5, characterised in that the means of varying the rates of flow of the draw-off flows qc and qf is constituted by a circuit (26) connecting the draw-off pipe (25) for the flow qc and the second end chamber (19) of the mixer valve and comprising in series a solenoid valve (27) and a third choke S3 and by a fourth choke of fixed cross section S4 placed in the axial bore (21) connecting the second end chamber (19) and the central chamber (20) of the mixer valve.

7. Fuel distribution circuit in accordance with any one of Claims 1 to 6, characterised in that it comprises a return valve (28) placed between the outlet of the mixing device and the aircraft's tank.